# EUROPÄISCHE PATENTSCHRIFT

(11) **EP 0 899 435 B1**
(45) Veröffentlichungstag und Bekanntmachung des Hinweises auf die Patenterteilung: **19.11.2003**
(21) Anmeldenummer: 97810615.1
(22) Anmeldetag: 29.08.1997
(51) Int. Cl.: F02B 33/42, F04F 11/02, F01N 3/20

(54) **Gasdynamische Druckwellenmaschine**
Aerodynamic pressure wave machine
Machine à ondes de pression utilisant la dynamique des gaz

(43) Veröffentlichungstag der Anmeldung: 03.03.1999
(73) Patentinhaber: Swissauto Engineering S.A., 1037 Etagnières (CH)
(72) Erfinder: Wenger, Urs, 4900 Langenthal (CH); Martin, Roger, 5504 Othmarsingen (CH)
(74) Vertreter: AMMANN PATENTANWAELTE AG BERN

(56) Entgegenhaltungen:
- EP-A- 0 210 328
- WO-A-97/20134
- WO-A-97/33080
- CH-A- 681 738
- PATENT ABSTRACTS OF JAPAN vol. 016, no. 299 (M-1274), 2.Juli 1992 & JP 04 081510 A (MAZDA MOTOR CORP), 16.März 1992,
- PATENT ABSTRACTS OF JAPAN vol. 011, no. 196 (M-601), 24.Juni 1987 & JP 62 020630 A (MAZDA MOTOR CORP), 29.Januar 1987,
- PATENT ABSTRACTS OF JAPAN vol. 013, no. 257 (M-837), 14.Juni 1989 & JP 01 060717 A (MASASHI HARADA), 7.März 1989,

## Beschreibung

Die vorliegende Erfindung bezieht sich auf eine gasdynamische Druckwellenmaschine gemäss dem Oberbegriff der unabhängigen Patentansprüche.

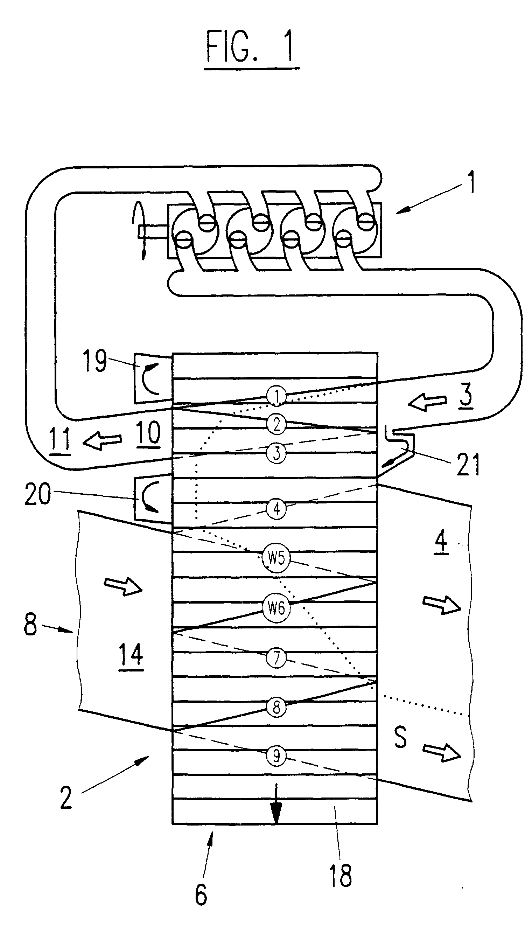

Eine solche Druckwellenmaschine ist aus dem Stand der Technik bekannt, beispielsweise aus der CH-A-681 738. Es ist ein erstes allgemeines Ziel der vorliegenden Erfindung, den Wirkungsgrad einer gasdynamischen Druckwellenmaschine gemäss Stand der Technik, wie sie in Figur 1 schematisch dargestellt ist, mittels verschiedener Massnahmen zu verbessern.

Bei einer gasdynamischen Druckwellenmaschine nach Stand der Technik zur Aufladung einer Verbrennungsmaschine, die mit vier Kanälen ohne zusätzliche Regeleinrichtungen in Form von Taschen verwendet wird, kann die Prozessabstimmung nur auf einem Betriebspunkt der Verbrennungsmaschine erfolgen. Man spricht in diesem Zusammenhang vom Auslegepunkt der Druckwellenmaschine. Durch die Verwendung von Taschen in den Gehäusewänden kann die Druckwellenmaschine abstimmungsunempfindlicher gestaltet werden und der Last-, Drehzahl- und Volumenbereich stark ausgedehnt werden. Der Nachteil dieses Verfahrens ist, dass der Druckwellenprozess im nicht abgestimmten Kennfeldbereich über Nebenprozesse geleitet wird, welche keinen optimalen Wirkungsgrad ergeben können. Ausserdem verursacht dies eine Erhöhung der Verluste durch die in den Taschen stattfindenden Nebenprozesse wie Einströmen und Ausströmen von Gasen und die Erzeugung von Druck- und Expansionswellen durch die Taschen.

Der Übergang vom sogenannten Primärprozess, auch Kompressions-Taschenprozess genannt, auf den Hauptprozess, auch abgestimmter Prozess genannt, verursacht Störungen im Druckwellenprozess, die Spülungseinbrüche und damit Bereiche hoher Rezirkulation von Abgas in die Ladeluft verursachen. Um in diesen Bereichen, wie auch im Startfall, erhöhte Rezirkulation zu vermeiden, muss ein Zufluss zur Gastasche, die entweder als gefräste Schwelle oder als gesteuerter Zufluss wie gemäss oben genanntem Dokument vorgesehen werden, der jedoch weitere Verluste durch das Abzweigen von Hochdruckenergie in den Niederdruck-Prozess erzeugt.

Bei tiefem Durchsatz und tiefen Temperaturen, d. h. bei Motorstart, Leerlauf, unterer Teillast, steigt die Rezirkulationsempfindlichkeit stark an. Die Standard-Druckwellenmaschine läuft dabei in einem nicht abgestimmten Bereich bei zu tiefem Energieniveau, um einen ungestörten Druckwellenprozess zu ermöglichen. Um diesen Bereich bei der Standardmaschine trotzdem fahrbar zu machen, wird ein Teil der Abgase vor dem Hochdruckabgaseintritt in den Rotor in Gastaschen umgeleitet, um die Spülung des Rotors zu verbessern, entweder mit einem fixen Zufluss oder mit dem aus der CH-A-681 738 bekannten Verfahren des variablen Zuflusses. Nachteilig an diesem System ist dabei, dass der Druckaufbau für den Ladedruck stark verringert wird, da ein Teil des Abgases, welches normalerweise für den Hochdruckprozess zur Verfügung steht, in den Niederdruck-Prozess umgeleitet wird.

Dies trifft auch für die Ausführung gemäss EP-A-0 210 328 zu, in welcher weitere Einrichtungen zur Steuerung des Hochdruckabgasstromes offenbart werden, am Hochdruckabgaskanal jedoch stets ein Energie absorbierender Steg zwischen Kanal und Gastasche vorhanden ist.

Es ist von diesem Stand der Technik ausgehend eine erste Aufgabe der Erfindung, eine Druckwellenmaschine anzugeben, die ohne Verwendung von Gastaschen bei tiefem Durchsatz und tiefen Temperaturen einen besseren Wirkungsgrad aufweist.

Diese Aufgabe wird mit einer Druckwellenmaschine gemäss Patentanspruch 1 gelöst.

Aus der WO 97 33080 ist eine Druckwellenmaschine bekannt, die sowohl einen Dreiwegkatalysator als auch einen Oxydationskatalysator aufweist und wobei zwischen dem Auslass des Motors und dem Dreiwegkatalysator eine Heizeinrichtung angeordnet ist.

Weitere Vorteile und Ausführungsbeispiele der Druckwellenmaschine sind in den abhängigen Ansprüchen definiert, wobei gemäss Anspruch 4 bessere Kaltstarteigenschaften vorgesehen sind.

Die Erfindung wird im folgenden anhand einer Zeichnung von Ausführungsbeispielen näher erläutert.
- Figur 1: zeigt schematisch einen abgewickelten zylindrischen Schnitt durch die Zellen eines Rotors einer Druckwellenmaschine gemäss Stand der Technik,
- Figur 2: zeigt schematisch ein Detail eines abgewickelten zylindrischen Schnittes durch die Zellen eines Rotors einer Druckwellenmaschine gemäss Stand der Technik,
- Figur 3: zeigt schematisch ein Detail eines abgewickelten zylindrischen Schnittes durch die Zellen eines Rotors einer weiteren Druckwellenmaschine gemäss Stand der Technik,
- Figuren 4, 4A: zeigen schematisch ein Detail eines abgewickelten zylindrischen Schnittes durch die Zellen eines Rotors einer Druckwellenmaschine gemäss Erfindung,
- Figuren 5, 5A: zeigen eine Variante zu der Ausführung nach den Figuren 4, 4A, und
- Figur 6: zeigt schematisch eine Druckwellenmaschine mit Heizeinrichtung und Katalysatoren.

Der Einfachheit halber ist in der Abwicklungen ein Druckwellen-Zyklus dargestellt und beschrieben. Die Erfindung ist jedoch von der Anzahl Druckwellen-Zyklen unabhängig; sie kann für Druckwellenmaschinen mit nur einem Zyklus oder aber mit zwei oder mehr Zyklen angewandt werden.

Figur 1 zeigt eine Abwicklung des Rotors einer Druckwellenmaschine, und man erkennt die Verbrennungsmaschine 1, die gasdynamische Druckwellenmaschine 2, den Hochdruck-Abgaskanal 3 und den Niederdruck-Abgaskanal 4 inklusive der Spülluft S, den Rotor 6 mit den einzelnen Zellen 18, den Frischlufteintritt 8, bzw. Niederdruck-Frischluftzufuhrkanal 14, den Hochdruck-Ladeluftkanal 10, der in den Ladeluftkanal 11 übergeht und zur Verbrennungsmaschine 1 führt.

Wie bereits eingangs erwähnt wurde, ist die Prozessabstimmung auf die Verbrennungsmaschine bei der Verwendung der vier Kanäle ohne zusätzliche Regeleinrichtungen nur auf einen Betriebspunkt der Verbrennungsmaschine möglich. Dabei spricht man in diesem Zusammenhang vom Auslegepunkt der Druckwellenmaschine. Durch die Verwendung von Taschen in der Gehäusewand kann die Druckwellenmaschine abstimmungsunempfindlicher gemacht werden und damit der Last-, Drehzahl- und Volumenbereich stark ausgedehnt werden. Im Verlaufe der langjährigen Entwicklung von solchen Druckwellenmaschinen wurden verschiedene Taschen in der Gehäusewand ausgefräst, z. B. eine Kompressionstasche 19, eine Expansionstasche 20 und eine Gastasche 21, deren Anwendungen dem Fachmann wohlbekannt sind. Bei der Verwendung solcher Taschen ist es ein Nachteil, dass der Druckwellenprozess im nicht abgestimmten Kennfeldbereich über Nebenprozesse geleitet wird, welche nie einen optimalen Wirkungsgrad ergeben.

Normalerweise wird die Druckwellenmaschine mit bekannten Verfahren, beispielsweise Charakteristikenverfahren und Auslegungsberechnungen, auf den vom Verbrennungsmaschinen-Hersteller gewünschten Punkt, meist bei Nenndrehzahl des Motors, optimal ausgelegt, wobei dies entweder ohne Taschen oder auch mit einer oder zwei oder allen drei Taschen geschehen kann.

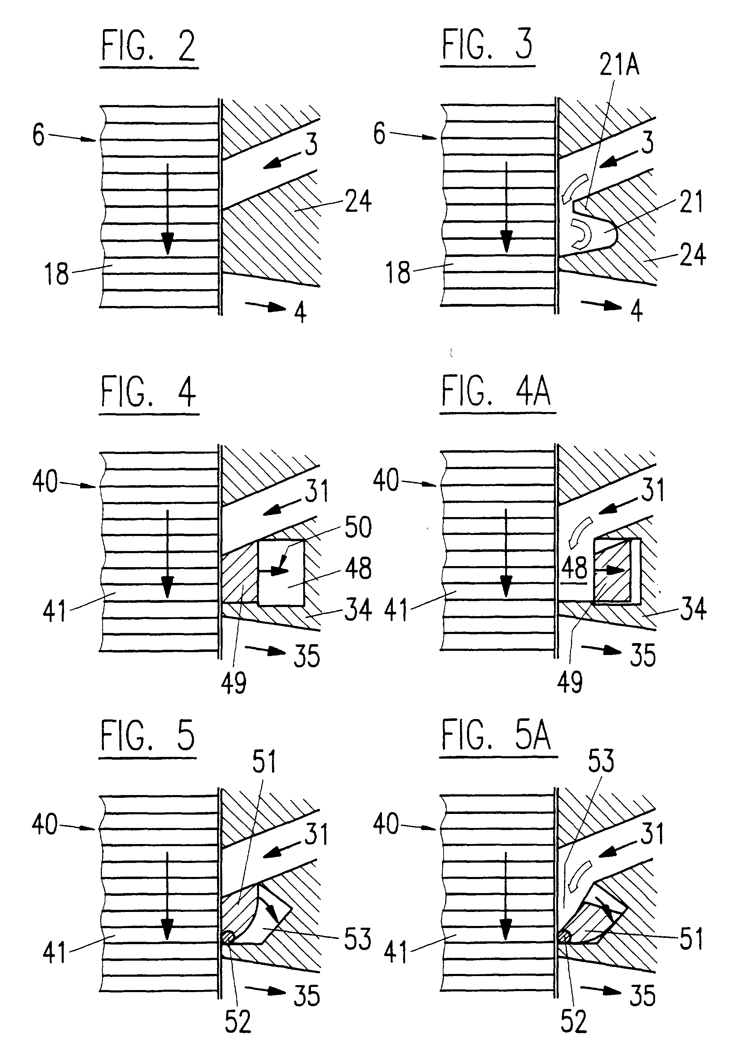

Die Figuren 2 bis 5 beziehen sich auf die Beeinflussung des Hochdruck-Abgasstromes. In Figur 2 ist, in Anlehnung an Figur 1, ein Hochdruck-Abgaskanal dargestellt, der keinerlei Mittel zur Beeinflussung des Hochdruck-Abgasstromes aufweist. Der Rotor 6 mit seinen Zellen 18 ist in abgewickelter Form dargestellt, und man erkennt ferner das Gasgehäuse 24, den Hochdruck-Abgaskanal 3 sowie den Niederdruck-Abgaskanal 4.

In Figur 3 ist zusätzlich zu diesen Elementen die Gastasche 21 eingezeichnet, wie sie beispielsweise in der eingangs erwähnten CH-A-681 738 vorhanden ist. Diese Gastasche sowie vor allem der notwendigerweise vorhandene Steg 21A zwischen Hochdruck-Abgaskanal und Gastasche erzeugt zusätzliche Verluste, besonders dann, wenn bei tiefen bis mittleren Drehzahlen, Temperaturen und Durchsätzen der Verbrennungsmaschine ein Abblasen im Normalfall unnötig ist.

In den Figuren 4, 4A und 5, 5A ist eine erfindungsgemässe Beeinflussung des Hochdruckabgaskanals schematisch dargestellt.

In den Figuren 4 und 4A ist der abgewickelte Rotor 40 mit den Zellen 41 dargestellt und, im Gegensatz zur Gastasche in Figur 3, eine Aussparung 48 im Gasgehäuse 34 vorgesehen, die durch einen Schieber 49 verändert werden kann, wie dies durch den Pfeil 50 angedeutet ist. In Figur 4A ist der Schieber 49 ganz in Pfeilrichtung eingerückt, so dass der Hochdruck-Abgaskanal verbreitert ist, ohne dass ein Steg entstanden ist. Durch eine geeignete und für einen Fachmann berechenbare Steuerung kann der Schieber derart verschoben werden, dass der Hochdruck-Kanal dermassen verbreitert wird, bis der Druck darin so weit abgesunken ist, dass der durch den Druckwellenprozess erzeugte Ladedruck auf das gewünschte Niveau absinkt.

In den Figuren 5 und 5A ist eine Variante des Schiebers dargestellt, wobei es sich dabei um ein schwenkbares Teil 51 handelt, das an einem Scharnier 52 angelenkt ist und durch eine ähnliche Steuerelektronik wie oben bewegt werden kann, die eine Verbreiterung 53 des Hochdruck-Abgaskanals bewirkt.

Gleichzeitig wird durch diese Vorrichtung der Spülprozess bei vergrössertem Hochdruck-Abgaskanal durch die Abzweigung vom Hochdruck-Abgas- in den Niederdruck-Prozess stark verbessert und damit der Wirkungsgrad deutlich angehoben. Dieses Verfahren kann beim Otto-Motor auch als Leistungsregelung verwendet werden, indem der Ladedruck durch geeignete, an sich bekannte Massnahmen im gewünschten Mass reguliert wird. Diese Massnahme, d. h. die Vergrösserung des Hochdruck-Abgaskanals und die Vermeidung von Gastaschen, bzw. den Stegen dazwischen, bewirkt eine wesentliche Wirkungsgrad-Steigerung.

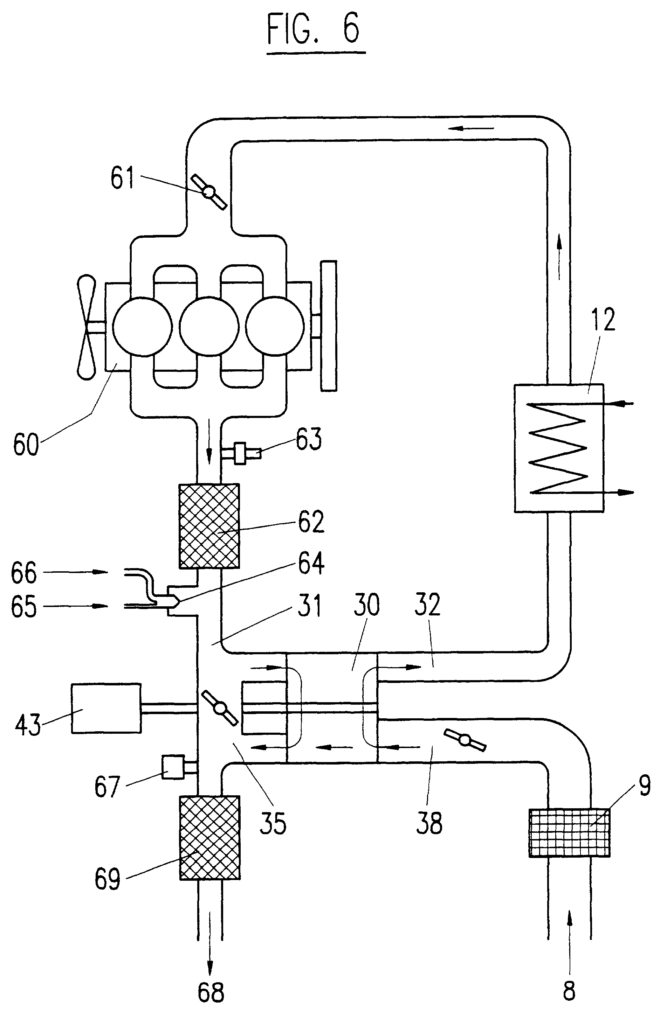

Eine weitere Massnahme, den Wirkungsgrad der Druckwellenmaschine insbesondere beim Kaltstart zu verbessern, ist in Fig. 6 schematisch und vereinfacht dargestellt. Darin werden die gleichen Elemente mit den gleichen Hinweiszeichen versehen. Die Druckwellenmaschine 30 ist über den Hochdruck-Abgaskanal 31 und über dem Hochdruck-Ladeluftkanal 32 mit der Verbrennungsmaschine 60, beispielsweise ein Otto-Motor, verbunden. Ausserdem weist die Druckwellenmaschine die beiden Niederdruck-Kanäle 35 und 38 auf, und man erkennt den Lufteinlass 8 und das Luftfilter 9, den Ladeluftkühler 12, eine Drosselklappe 61 sowie den Motorantrieb 43.

Zwecks Verbesserung des Kaltstarts ist zwischen dem Auslass der Verbrennungsmaschine und dem Hochdruck-Abgaskanal 31 der Druckwellenmaschine eine Heizeinrichtung 64 eingebaut, die als Brenner ausgebildet ist und eine Treibstoffzufuhr 65 und eine Luftzufuhr 66 enthält. Mit 67 ist ein Temperaturfühler bezeichnet. Bei vorliegendem Beispiel mit einem Otto-Motor ist zwischen dem Auslass des Motors und dem Hochdruck-Abgaskanal ein geregelter Dreiweg-Katalysator 62 mit der Lambda-Sonde 63 angeordnet, und die Heizeinrichtung 64 ist zwischen dem Katalysator 62 und der Druckwellenmaschine angeordnet, wirkt somit sowohl auf den Katalysator als auch auf die Druckwellenmaschine und verbessert bei beiden Aggregaten die Kaltstarteigenschaften. Um eine besonders wirksame Abgasreinigung zu erzielen, ist zwischen dem Niederdruck-Abgaskanal und dem Auspuff 68 ein weiterer Katalysator, ein Oxydationskatalysator 69, eingebaut.

Durch die Verwendung einer Heizeinrichtung, die auf den Hochdruck-Abgaskanal wirkt, kann beim Kaltstart vermieden werden, dass der Druckwellenlader bei zu tiefem Energieniveau läuft und somit die Gastasche verwendet oder der Hochdruck-Abgaskanal verbreitert werden muss. Durch die Verwendung der Heizeinrichtung wird demgemäss der Zufluss zu den Gastaschen verringert oder ganz vermieden und der Ladedruckaufbau geht wesentlich schneller vonstatten. Durch das Schliessen der Gastaschen wird vermieden, dass ein Teil der Heizenergie ungenützt abgeblasen wird.

Dies gilt auch für ein System ohne Dreiweg-Katalysator, z. B. für einen Dieselmotor, der gegebenfalls nur den Oxydations-Katalysator aufweist, der entweder vor oder nach der Druckwellenmaschine angeordnet sein kann.

Die Heizeinrichtung bringt bereits bei einer Druckwellenmaschine, die sonst gemäss dem Stand der Technik gebaut ist, einen Fortschritt, doch besonders auch bei einer Druckwellenmaschine mit Hochdruck-Abgaskanal-Verbreiterung, und mit keinem, einem oder zwei Katalysatoren.

## Patentansprüche

1. Gasdynamische Druckwellenmaschine, die bestimmt ist, einer Verbrennungsmaschine Ladeluft zuzuführen, mit einem Zellen (18, 41) aufweisenden Rotor (6, 40), einem Niederdruck-Frischluftzufuhrkanal (14, 38), einem zur Verbrennungsmaschine (1, 33) führenden Hochdruck-Ladeluftkanal (10, 32), einem von der Verbrennungsmaschine herkommenden Hochdruck-Abgaskanal (3, 31) und einem Niederdruck-Abgaskanal (4, 35), wobei der Niederdruck-Abgaskanal (4, 35) und der Hochdruck-Abgaskanal (3, 31) in einem Gasgehäuse (5, 34) und der Niederdruck-Frischluftzufuhrkanal (14, 38) und der Hochdruck-Ladeluftkanal (10, 32) in einem Luftgehäuse (15, 39) angeordnet sind, **dadurch gekennzeichnet, dass** der Hochdruck-Abgaskanal (31) rotorseitig verbreitert ist und Mittel (49, 51) aufweist, ohne Bildung eines Steges diese Verbreiterung (48, 53) zu verändern.

2. Gasdynamische Druckwellenmaschine nach Anspruch 1, **dadurch gekennzeichnet, dass** die Mittel einen gesteuerten Schieber (49) enthalten.

3. Gasdynamische Druckwellenmaschine nach Anspruch 1, **dadurch gekennzeichnet, dass** die Mittel einen Schwenkschieber (51) enthalten.

4. Gasdynamische Druckwellenmaschine nach einem der Ansprüche 1 bis 3, **dadurch gekennzeichnet, dass** zwischen dem Auslass der Verbrennungsmaschine (60) und dem Hochdruck-Abgaskanal (31) eine Heizeinrichtung (64) angeordnet ist.

5. Gasdynamische Druckwellenmaschine nach Anspruch 4, **dadurch gekennzeichnet, dass** die Heizeinrichtung ein Brenner (64) mit Luft- und Brennstoffzufuhr (66, 65) oder eine elektrische Heizeinrichtung ist.

6. Gasdynamische Druckwellenmaschine nach einem der Ansprüche 1 bis 5, die an einen Otto-Motor angeschlossen ist, **dadurch gekennzeichnet, dass** zwischen dem Auslass des Motors (60) und dem Hochdruck-Abgaskanal (31) der Druckwellenmaschine ein Dreiwegkatalysator (62) angeordnet ist.

7. Gasdynamische Druckwellenmaschine nach Anspruch 6, **dadurch gekennzeichnet, dass** zwischen dem Niederdruck-Abgaskanal (35) und dem Auslass (68) der Druckwellenmaschine ein Oxydations-Katalysator (69) nachgeschaltet ist.

8. Gasdynamische Druckwellenmaschine nach Anspruch 6 oder 7, **dadurch gekennzeichnet, dass** die Heizeinrichtung (64) zwischen dem Dreiweg-Katalysator (62) und dem Hochdruck-Abgaskanal (31) der Druckwellenmaschine angeordnet ist.

## Claims

1. Gas-dynamic pressure wave machine destined for the charge air supply of an internal combustion engine, comprising a rotor (6, 40) with cells (18, 41), a low pressure fresh air inlet channel (14, 38), a high pressure charge air channel (10, 32) leading to the internal combustion engine (1, 33), a high pressure exhaust channel (3, 31) coming from the internal combustion engine, and a low pressure exhaust channel (4, 35), the low pressure exhaust channel (4, 35) and the high pressure exhaust channel (3, 31) being enclosed in a gas enclosure (5, 34) and the low pressure fresh air inlet channel (14, 38) and the high pressure charge air channel (10, 32) being enclosed in an air enclosure (15, 39), **characterised in that** the high pressure exhaust channel (31) is enlarged on the rotor side and comprises means (49, 51) allowing to vary this enlargement (48, 53) without forming a ridge.

2. Gas-dynamic pressure wave machine according to claim 1, **characterised in that** the means include a controlled slide valve (49).

3. Gas-dynamic pressure wave machine according to claim 1, **characterised in that** the means include a swinging slide valve (51).

4. Gas-dynamic pressure wave machine according to one of claims 1 to 3, **characterised in that** a heating device (64) is interposed between the high pressure exhaust channel (31) and the internal combustion engine (60).

5. Gas-dynamic pressure wave machine according to claim 4, **characterised in that** the heating device is a burner (64) comprising an air and a fuel supply (66, 65), or an electric heating device.

6. Gas-dynamic pressure wave machine according to one of claims 1 to 5, connected to a spark ignition engine, **characterised in that** a three-way catalyst (62) is disposed between the outlet of the engine (60) and the high pressure exhaust channel (31) of the pressure wave machine.

7. Gas-dynamic pressure wave machine according to claim 6, **characterised in that** an oxidation catalyst (69) is connected between the low pressure exhaust channel (35) and the outlet (68) of the pressure wave machine.

8. Gas-dynamic pressure wave machine according to claim 6 or 7, **characterised in that** the heating device (64) is disposed between the three-way catalyst (62) and the high pressure exhaust channel (31) of the pressure wave machine.

## Revendications

1. Machine à ondes de pression gazodynamique destinée à amener l'air de charge à un moteur à combustion interne, comprenant un rotor (6, 40) avec des cellules (18, 41), un canal d'admission d'air frais à basse pression (14, 38), un canal d'air de charge à haute pression (10, 32) conduisant au moteur à combustion interne (1, 33), un canal des gaz d'échappement à haute pression (3, 31) en provenance du moteur à combustion interne et un canal des gaz d'échappement à basse pression (4, 35), le canal des gaz d'échappement à basse pression (4, 35) et le canal des gaz d'échappement à haute pression (3, 31) étant aménagés dans un carter à gaz (5, 34), et le canal d'amenée d'air frais à basse pression (14, 38) et le canal d'air de charge à haute pression (10, 32) étant aménagés dans un carter à air (15, 39), **caractérisée en ce que** le canal des gaz d'échappement à haute pression (31) est élargi du côté du rotor et comporte des moyens (49, 51) permettant de varier ledit élargissement (48, 53) sans former une nervure.

2. Machine à ondes de pression gazodynamique selon la revendication 1, **caractérisée en ce que** lesdits moyens comprennent une vanne (49) réglée.

3. Machine à ondes de pression gazodynamique selon la revendication 1, **caractérisée en ce que** lesdits moyens comprennent une vanne orientable (51).

4. Machine à ondes de pression gazodynamique selon l'une des revendications 1 à 3, **caractérisée en ce qu'**un dispositif de chauffage (64) est disposé entre l'échappement du moteur à combustion interne (60) et le canal des gaz d'échappement à haute pression.

5. Machine à ondes de pression gazodynamique selon la revendication 4, **caractérisée en ce que** le dispositif de chauffage est un brûleur (64) muni d'amenées d'air et de combustible (66, 65) ou un dispositif de chauffage électrique.

6. Machine à ondes de pression gazodynamique selon l'une des revendications 1 à 5, connectée à un moteur à allumage par étincelle, **caractérisée en ce qu'**un catalyseur à trois voies (62) est disposé entre l'échappement du moteur (60) et le canal des gaz d'échappement à haute pression (31) de la machine à ondes de pression.

7. Machine à ondes de pression gazodynamique selon la revendication 6, **caractérisée en ce qu'**un convertisseur catalytique à oxydation (69) est connecté entre le canal des gaz d'échappement à basse pression (35) et l'échappement (68) de la machine à ondes de pression.

8. Machine à ondes de pression gazodynamique selon la revendication 6 ou 7, **caractérisée en ce que** le dispositif de chauffage (64) est disposé entre le catalyseur à trois voies (62) et le canal des gaz d'échappement à haute pression (31) de la machine à ondes de pression.
